# EUROPÄISCHE PATENTSCHRIFT

(11) **EP 3 001 024 B1**
(45) Veröffentlichungstag und Bekanntmachung des Hinweises auf die Patenterteilung: **10.10.2018**
(21) Anmeldenummer: 15179677.8
(22) Anmeldetag: 04.08.2015
(51) Int. Cl.: F02M 57/00, F02M 51/06, G01L 9/00, F02M 65/00

(54) **KRAFTSTOFFINJEKTOR UND VERWENDUNG EINES KRAFTSTOFFINJEKTORS**
FUEL INJECTOR AND USE OF A FUEL INJECTOR
INJECTEUR DE CARBURANT ET UTILISATION D'UN INJECTEUR DE CARBURANT

(30) Priorität: 24.09.2014 DE 102014219242
(43) Veröffentlichungstag der Anmeldung: 30.03.2016
(73) Patentinhaber: ROBERT BOSCH GMBH, 70442 Stuttgart (DE)
(72) Erfinder: Kreschel, Henning, 71640 Ludwigsburg (DE); Schnaufer, Axel, 70435 Stuttgart (DE); Forke, Martin, 70499 Stuttgart (DE); Fischer, Fabian, 70176 Stuttgart (DE)

(56) Entgegenhaltungen:
- EP-A2- 2 105 602
- EP-A2- 2 105 607
- DE-A1- 3 719 842
- DE-A1- 19 813 756
- DE-A1-102005 053 683
- DE-A1-102010 016 424

## Beschreibung

### Stand der Technik

Die Erfindung betrifft einen Kraftstoffinjektor, insbesondere einen Common-Rail-Injektor, nach dem Oberbegriff des Anspruchs 1. Ferner betrifft die Erfindung die Verwendung eines erfindungsgemäßen Kraftstoffinjektors.

Ein Kraftstoffinjektor nach dem Oberbegriff des Anspruchs 1 ist aus der EP 1 042 603 B1 bekannt. Der bekannte Kraftstoffinjektor weist innerhalb seines Injektorgehäuses einen Sensor auf, der im Bereich einer Ablaufbohrung zwischen einem Steuerraum des Kraftstoffinjektors und einem Niederdruckbereich angeordnet ist. Der Sensor umgibt die Ablaufbohrung an einem hülsenförmigen Abschnitt eines Bauteils in radialer Richtung, wobei in dem Bauteil die Ablaufbohrung ausgebildet ist. In den Steuerraum des Kraftstoffinjektors ragt ein Endabschnitt eines als Düsennadel ausgebildeten Einspritzglieds hinein. Über eine Beeinflussung des Drucks in dem Steuerraum wird in bekannter Art und Weise die Bewegung des Einspritzglieds gesteuert, um zum Einspritzen von Kraftstoff in den Brennraum einer Brennkraftmaschine im Injektorgehäuse ausgebildete Einspritzöffnungen freizugeben. Der Druck im Steuerraum wird über den Abfluss von Kraftstoff aus dem besagten Steuerraum in den Niederdruckbereich über die Ablaufbohrung bewirkt, wobei die Ablaufbohrung mittels eines Schließglieds im Niederdruckbereich des Injektorgehäuses, welches wiederum mit einem Aktuator, beispielsweise einem Magnetaktuator oder einem Piezoaktuator betätigbar ist, verschlossen werden kann. In der abgesenkten Position des Einspritzglieds herrscht in dem Steuerraum und somit auch in der Ablaufbohrung ein relativ hoher (hydraulischer) Druck. Beim Entlasten des Steuerraums fließt hingegen Kraftstoff aus dem Steuerraum in den Niederdruckbereich ab, wobei sich der hydraulische Druck in der Ablaufbohrung verringert. Der bekannte Sensor ist dazu ausgebildet, den Druck bzw. Druckschwankungen in der Ablaufbohrung, verursacht durch das Öffnen des Schließglieds aus dem Steuerraum, zu erfassen, woraus auf die Stellung des Einspritzglieds (Düsennadel) geschlossen werden kann. Wesentlich dabei ist, dass das aus dem bekannten Kraftstoffinjektor bekannte Piezoelement im Bereich der Ablaufbohrung diese radial umgibt und an dem die Ablaufbohrung begrenzenden Wandabschnitt befestigt ist, insbesondere durch eine Klebe- bzw. Lötverbindung. Dies bewirkt, dass bei einer Druckerhöhung in der Ablaufbohrung Zugspannungen in die Keramik des Piezoelements eingeleitet werden. Dabei ist bekannt, dass piezokeramische Sensoren bei auftretenden Zugspannungen von ca. 20MPa zerstört werden können. Insbesondere wird durch die einseitige Klebung bzw. Lötung eine Schubspannung in die Keramik eingeleitet. Dabei entsteht über die Dicke der Keramik gesehen ein inhomogener Dehnungszustand, so dass das Potenzial der Keramik zur Signalmessung nur teilweise ausgenutzt wird. Darüber hinaus ist es als nachteilhaft anzusehen, dass die Dauerhaltbarkeit bei einer Verklebung des Piezoelements, beispielsweise über einen Zeitraum von 15 Jahren, welches die typische Nutzungszeit eines Pkws darstellt, bei Temperaturen von -40°C bis +160°C, aufgrund von Medieneinflüssen, Schüttelbelastung am Motor usw. als kritisch zu bewerten ist.

Aus der EP 2 105 607 A2 ist ein weiterer Kraftstoffinjektor nach dem Oberbegriff des Anspruchs 1 bekannt, bei dem die Sensoreinrichtung ein Piezoelement aufweist, das radial innerhalb eines Gehäuses der Sensoreinrichtung angeordnet ist. Stirnseitig ist das Piezoelement von einer Membran überdeckt, über die der in dem Hochdruckraum herrschende Kraftstoffdruck auf das Piezoelement übertragen wird, um ein entsprechendes Signal zu erzeugen. Dabei wird über die Membran auf das Piezoelement eine senkrecht zum Piezoelement ausgerichtete Druckspannung erzeugt.

Aus der DE 198 13 756 A1 ist ein Kraftstoffinjektor nach dem Oberbegriff des Anspruchs 1 bekannt, bei dem in einer in dem Injektorgehäuse an einer Außenwand ausgebildeten Sacklochbohrung ein in Form einer Hülse ausgebildetes Piezoelement angeordnet ist, das stirnseitig von einem Spannelement kraftbeaufschlagt ist, das das Piezoelement mit der dem Spannelement gegenüberliegenden Stirnseite gegen den Boden der Sacklochbohrung drückt. Der Boden wölbt sich in Abhängigkeit von dem in einer Kraftstoffversorgungsbohrung herrschenden Druck des Kraftstoffs, wobei das Piezoelement an seinem Innenumfang und seinem Außenumfang von jeweils einem Messelement umgeben ist, um das erzeugte Spannungssignal zu erfassen.

Aus der EP 2 105 602 A1 ist es darüber hinaus bei einem Kraftstoffinjektor nach dem Oberbegriff des Anspruchs 1 bekannt, ein Sensorelement im Bereich einer eine Sacklochbohrung aufweisenden Einschraubmutter anzuordnen. Dabei ist das Sensorelement auf der der Sacklochbohrung gegenüberliegenden Seite der Einschraubmutter befestigt und erzeugt in Abhängigkeit der Wölbung des Bodenbereichs der Einschraubmutter ein entsprechendes Spannungssignal. Aus der nachveröffentlichten DE 10 2014 204 629 A1 der Anmelderin ist darüber hinaus ein gattungsgemäßer Kraftstoffinjektor bekannt, bei dem von der Versorgungsbohrung für den Hochdruckraum eine an der Außenseite des Injektorgehäuses mündende Querbohrung ausgeht. In der Querbohrung ist ein Innengewinde ausgebildet, in das ein Sensorelement mit einem Außengewinde einschraubbar ist. In dem Sensorelement ist ein unter Vorspannung angeordnetes Piezoelement angeordnet, welches bei einer Deformation einer in dem Sensorelement angeordneten Membran in einer senkrecht zur Ebene des Piezoelements angeordneten Richtung kraftbeaufschlagt wird. Nachteilig bei dem aus dem zuletzt genannten Kraftstoffinjektor bekannten Sensorelement ist es, dass dieses den Bauraum des Kraftstoffinjektors in radialer Richtung vergrößert und darüber hinaus relativ aufwendig ausgebildet ist.

### Offenbarung der Erfindung

Ausgehend von dem dargestellten Stand der Technik liegt der Erfindung die Aufgabe zugrunde, einen Kraftstoffinjektor, insbesondere einen Common-Rail-Injektor, nach dem Oberbegriff des Anspruchs 1 derart weiterzubilden, dass eine besonders in Bezug auf die Lebensdauer gesehen robuste Sensoreinrichtung mit hoher Genauigkeit ermöglicht wird. Diese Aufgabe wird erfindungsgemäß bei einem Kraftstoffinjektor mit den Merkmalen des Anspruchs 1 dadurch gelöst, dass die Sensoreinrichtung ein Spannelement zur zumindest bereichsweisen radialen Aufnahme des Piezoelements aufweist, wobei das Spannelement das Piezoelement mit einer zumindest im Wesentlichen parallel zum Piezoelement verlaufenden Richtung in Abhängigkeit des Kraftstoffdrucks in dem Injektorgehäuse kraftbeaufschlagt. Durch die radiale Aufnahme des Piezoelements in dem Spannelement wird dieses in Abhängigkeit vom Kraftstoffdruck mit einer in der Ebene des Piezoelements verlaufenden Druckspannung kraftbeaufschlagt. Insbesondere ist das Piezoelement in dem Spannelement unter Vorspannung auf Druck angeordnet, so dass sich eine Änderung des Kraftstoffdrucks in einer Änderung der Druckspannung in dem Piezoelement äußert. Dadurch entsteht in der Piezokeramik insgesamt gesehen ein homogener Druckspannungszustand. Bei einer Druckveränderung des Kraftstoffdrucks in dem Injektorgehäuse, insbesondere in der Versorgungsbohrung, wird über das Spannelement eine entsprechend dem Kraftstoffdruck veränderliche Druckspannung auf das Piezoelement übertragen, sodass dieses ein entsprechendes Spannungssignal erzeugt, mittels dessen auf den Kraftstoffdruck geschlossen werden kann. Gleichzeitig ermöglicht es das Spannelement, das Piezoelement ohne Verwendung einer Klebeverbindung am Kraftstoffinjektor anzuordnen.

Vorteilhafte Weiterbildungen des erfindungsgemäßen Kraftstoffinjektors sind in den Unteransprüchen aufgeführt.

In bevorzugter Anordnung der Sensoreinrichtung ist diese im Bereich einer sacklochförmigen Ausnehmung im Injektorgehäuse angeordnet, wobei die Größe der Ausnehmung in der Ebene des Spannelements in Abhängigkeit vom Kraftstoffdruck veränderbar ist. Insbesondere ist das Spannelement durch einen radial umlaufenden Wandabschnitt in der Ausnehmung aufgenommen, derart, dass sich die Größe der Ausnehmung und somit die in radialer Richtung wirkende Druckspannung auf das Spannelement und das Piezoelement sich in Abhängigkeit des Kraftstoffdrucks verändert.

In einer Weiterbildung der zuletzt genannten Anordnung ist es vorgesehen, dass die Ausnehmung in Wirkverbindung mit der Versorgungsbohrung angeordnet ist, wobei zwischen der Ausnehmung und der in den Hochdruckraum des Kraftstoffinjektors mündenden Versorgungsbohrung ein Wandabschnitt des Injektorgehäuses ausgebildet ist. Dies hat den besonderen Vorteil, dass die Sensoreinrichtung außerhalb des Hochdruckbereichs bzw. der Versorgungsbohrung des Kraftstoffinjektors angeordnet ist und somit nicht hochdruckfest ausgebildet werden muss. Außerdem wird dadurch auch die konstruktive Ausbildung der in dem Hochdruckraum angeordneten Bauteile nicht tangiert und im Hochdruckraum kein zusätzlicher Bauraum für die Sensoreinrichtung benötigt.

Weiterhin ist es bei der zuletzt genannten Ausbildung bzw. Anordnung der Ausnehmung vorgesehen, dass die Wanddicke des Injektorgehäuses im Bereich der Ausnehmung reduziert ist. Dadurch wölbt sich das Injektorgehäuse im Bereich der Ausnehmung bei einer Druckerhöhung in der Versorgungsbohrung in Art einer Membran stärker als in dem Bereich neben der Ausnehmung. Die stärkere Deformation des Injektorgehäuses im Bereich der Ausnehmung bewirkt eine radiale Aufweitung der Ausnehmung im Bereich des Sensors und damit eine Reduzierung der Druckspannung in dem Piezoelement.

Um eine gleichmäßige Deformation des Wandabschnitts im Bereich der Ausnehmung und gleichmäßige Druckbeanspruchung des Piezoelements zu ermöglichen, ist es vorgesehen, dass das Piezoelement und der Grund der Ausnehmung parallel zueinander angeordnet sind.

Wie bereits erläutert, ist es bevorzugt vorgesehen, dass das Piezoelement unter radialer Vorspannung in Form einer Druckspannung in dem Spannelement aufgenommen ist. Die dabei einmalig entstehende Ladung des Piezoelements kann bei der Montage des Kraftstoffinjektors über einen Ableitwiderstand bzw. kurzgeschlossenen Leitungen abgebaut werden. Durch die radiale Vorspannung wird in der Keramik ein homogener Druckspannungszustand erzeugt, der durch die Deformation des Injektorgehäuses verändert wird, um damit das Messsignal zu generieren.

In bevorzugter konstruktiver Ausbildung des Spannelements ist dieses in Form eines Spannrings ausgebildet. Dadurch lässt sich insbesondere die gewünschte radiale Vorspannung gleichmäßig in das Piezoelement einleiten.

Insbesondere ist es dabei von Vorteil, wenn das Spannelement Mittel zur Einstellung der radialen Vorspannkraft aufweist. Dadurch kann beispielsweise ein standardisiertes Sensorelement an unterschiedliche Betriebsdrücke von Kraftstoffinjektoren besonders einfach angepasst werden.

Insbesondere ist die Verwendung eines erfindungsgemäßen Kraftstoffinjektors bei selbstzündenden Brennkraftmaschinen vorgesehen, bei denen der Systemdruck mehr als 2000bar beträgt. Die Erfindung soll jedoch nicht auf derartig (hohe) Betriebs- bzw. Systemdrücke beschränkt sein.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: einen Längsschnitt durch einen erfindungsgemäßen Kraftstoffinjektor mit einem Sensor zur Erfassung von Druckschwankungen im Bereich einer unter Hochdruck stehenden Versorgungsleitung außerhalb der Versorgungsleitung,
- Fig. 2: einen Ausschnitt aus dem Kraftstoffinjektor gemäß Fig. 1 im Bereich des Sensors bei einer ersten Ausführungsform des Sensors,
- Fig. 3 bis Fig. 5: jeweils den Ausschnitt gemäß Fig. 2 bei abgewandelten Sensoren unter Verwendung unterschiedlich ausgebildeter Spannelemente und
- Fig. 6: in Draufsicht einen Spannring zur Verwendung bei einem Sensorelement.

Gleiche Elemente bzw. Elemente mit gleicher Funktion sind in den Figuren mit den gleichen Bezugsziffern versehen.

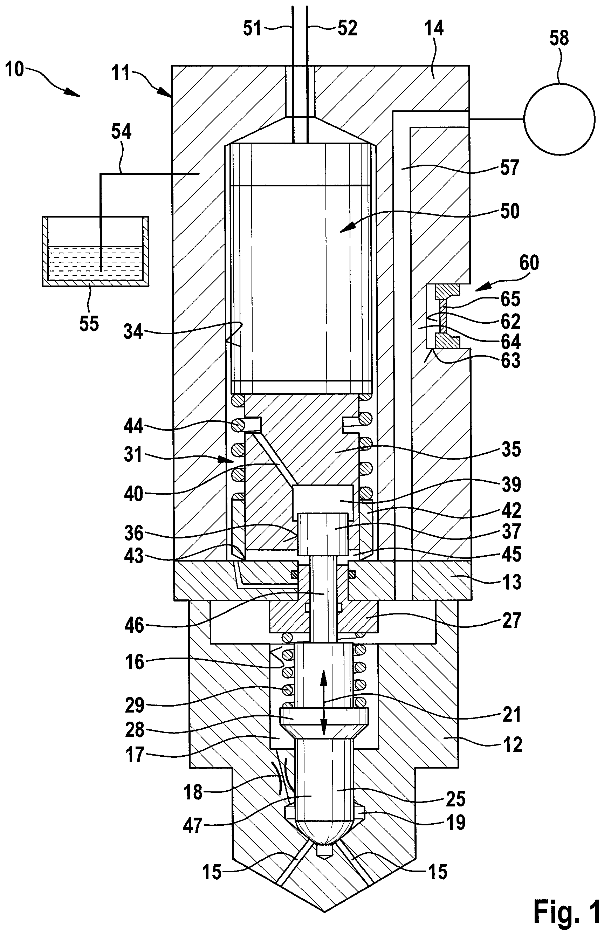

In der Fig. 1 ist ein erfindungsgemäßer Kraftstoffinjektor 10 dargestellt, wie er als Bestandteil eines sogenannten Common-Rail-Einspritzsystems zum Einspritzen von Kraftstoff in den Brennraum einer nicht dargestellten Brennkraftmaschine dient. Insbesondere weist das Common-Rail-Einspritzsystem hierbei ein Systemdruck von mehr als 2000bar auf.

Der Kraftstoffinjektor 10 umfasst ein Injektorgehäuse 11, das im dargestellten Ausführungsbeispiel im Wesentlichen aus drei, in Axialrichtung aneinander anschließenden Bauteilen besteht: Auf der dem nicht gezeigten Brennraum der Brennkraftmaschine zugewandten Seite weist das Injektorgehäuse 11 einen Düsenkörper 12 auf, an den sich eine Zwischenplatte 13, und an diese wiederum auf der dem Düsenkörper 12 abgewandten Seite ein Haltekörper 14 anschließt. Die erwähnten Bauteile des Injektorgehäuses 11 sind insbesondere unter Verwendung einer in der Fig. 1 nicht dargestellten Düsenspannmutter, wie an sich aus dem Stand der Technik bekannt, axial miteinander dichtend verspannt.

In dem Düsenkörper 12 ist wenigstens eine, vorzugsweise jedoch mehrere Einspritzöffnungen 15 zum Einspritzen des unter Hochdruck stehenden Kraftstoffs in den Brennraum der Brennkraftmaschine ausgebildet. Der Düsenkörper 12 bildet in einer sacklochförmigen Ausnehmung 16 einen Hochdruckraum 17 aus, der über einen Zuströmkanal 18 hydraulisch mit einem Sitzraum 19 der Ausnehmung 16 verbunden ist. Innerhalb der Ausnehmung 16 ist ein in Richtung des Doppelpfeils 21 hubbeweglich angeordnetes Einspritzglied in Form einer Düsennadel 25 angeordnet. In der in der Fig.1 dargestellten abgesenkten Stellung der Düsennadel 25 verschließt diese die Einspritzöffnungen 15. Demgegenüber werden die Einspritzöffnungen 15 in einer angehobenen Position der Düsennadel 25 zum Einspritzen von Kraftstoff in den Brennraum der Brennkraftmaschine freigegeben.

Die Düsennadel 25 ist im Hochdruckraum 17 innerhalb eines Haltekörpers 27 radial geführt, wobei zwischen dem Haltekörper 27 und einem Bund 28 der Düsennadel 25 eine als Schließfeder ausgebildete Druckfeder 29 angeordnet ist, die die Düsennadel 25 in Richtung ihrer Schließstellung kraftbeaufschlagt.

Auf der dem Hochdruckraum 17 abgewandten Seite der Zwischenplatte 13 ist in dem Haltekörper 14 ein Niederdruckbereich 31 des Injektorgehäuses 11 ausgebildet. In dem Haltekörper 14 ist in einer Ausnehmung 34 ein Kopplerkolben 35 angeordnet, der auf der der Düsennadel 25 zugewandten Seite eine sacklochförmige Aufnahme 36 für einen zylindrisch ausgebildeten oberen Endabschnitt 37 der Düsennadel 25 ausbildet. Die Aufnahme 36 dient der radialen Führung des Endabschnitts 37, wobei in Abhängigkeit der Stellung des Endabschnitts 37 innerhalb eines Ausgleichsraums 39 in der Aufnahme 36 ein unterschiedliches Volumen ausgebildet ist. Der Ausgleichsraum 39 ist über eine Verbindungsbohrung 40 mit dem Niederdruckbereich 31 druckentlastbar verbunden.

Der Kopplerkolben 35 ist radial von einer Kopplerhülse 42 umfasst, die sich über eine Beisskante 43 axial an der Zwischenplatte 13 abstützt. Die Kopplerhülse 42 ist mittels einer weiteren Druckfeder 44, die sich an der Unterseite eines Piezoaktors 50 abstützt, axial gegen die Zwischenplatte 13 kraftbeaufschlagt. Zwischen der der Zwischenplatte 13 zugewandten Seite des Kopplerkolbens 35, der Zwischenplatte 13 und der Kopplerhülse 42 ist ein Kopplerraum 45 ausgebildet. Der Piezoaktor 50 ist über Anschlussleitungen 51, 52 elektrisch mit einer nicht dargestellten Spannungsquelle verbunden. Bei einer Bestromung des Piezoaktors 50 verändert sich dessen axiale Länge derart, dass der mit dem Piezoaktor 50 verbundene Kopplerkolben 35 in Richtung der Zwischenplatte 13 bewegt wird, wodurch Kraftstoff aus dem Ausgleichsraum 39 verdrängt wird, welcher über die Verbindungsbohrung 40 in den Niederdruckbereich 31 abströmt. Vom Niederdruckbereich 31 strömt der Kraftstoff über eine Rücklaufleitung 54 beispielsweise in einen Kraftstofftank 55 zurück. Durch die Bewegung des Kopplerkolbens 35 in Richtung der Zwischenplatte 13 kommt es zu einer Kompression des in dem Kopplerraum 45 befindlichen Kraftstoffs, wobei über die Differenzfläche zwischen einem Führungsbereich 46 der Düsennadel 25 im Bereich des Haltekörpers 27 und einem Bereich 47 der Düsennadel 25 im Hochdruckraum 17 eine in Öffnungsrichtung der Düsennadel 25 gerichtete hydraulische Druckkraft erzeugt wird, die ein Abheben der Düsennadel 25 aus ihrer gezeigten Schließstellung bewirkt. Dadurch wird Kraftstoff über die Einspritzöffnungen 15 in den Brennraum der Brennkraftmaschine eingespritzt.

Die Versorgung des Hochdruckraums 17 mit Kraftstoff erfolgt über eine innerhalb der Zwischenplatte 13 und des Haltekörpers 14 des Injektorgehäuses 11 angeordnete Versorgungsbohrung 57, die mit einer Kraftstoffquelle 58 (Rail) mit unter Hochdruck stehendem Kraftstoff versorgt ist. Erfindungsgemäß wird der in der Versorgungsbohrung 57 herrschende Druck des Kraftstoffs mittels eines Sensors 60 erfasst. Der Sensor 60 ist in einer sacklochförmigen Ausnehmung 61 innerhalb der äußeren Kontur des Injektorgehäuses 11 angeordnet, die in Wirkverbindung mit der Versorgungsbohrung 57 angeordnet ist. Insbesondere ist die einen konstanten Durchmesser aufweisende Ausnehmung 61 in etwa rechtwinklig zur Versorgungsbohrung 57 bzw. zur Längsachse des Injektorgehäuses 11 außerhalb der Versorgungsbohrung 57 und somit auch außerhalb des Hochdruckbereichs des Injektorgehäuses 11 angeordnet. Im Bereich der Ausnehmung 61 ist die Wanddicke des Injektorgehäuses 11 im Vergleich zu den benachbart zur Ausnehmung 61 angeordneten Bereichen reduziert. Insbesondere ist die Wanddicke des Wandabschnitts 64 im Bereich des Grunds 62 der Ausnehmung 61 so bemessen, dass beim Betrieb des Kraftstoffinjektors 10 auftretende Druckschwankungen in der Versorgungsbohrung 57 zu einer elastischen Verformung des Wandabschnitts 64 und zu einer Veränderung der Größe der Ausnehmung 61 im Bereich des Sensors 60 führen, die mittels des Sensors 60 detektierbar ist. Hierzu ist der Sensor 60 im Bereich der Ausnehmung 61 durch eine radial umlaufende Umfangswand 63 der Ausnehmung 61 unter radialer Vorspannung in Form einer Druckspannung aufgenommen.

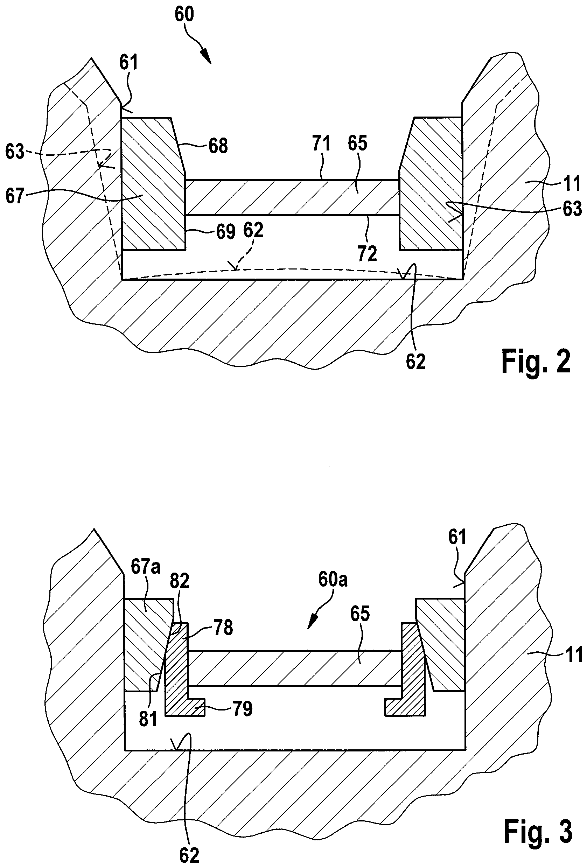

Wie aus einer Zusammenschau der Fig. 1 und 2 bei einer ersten Ausführungsform des Sensors 60 erkennbar ist, weist der Sensor 60 ein in Draufsicht rundes bzw. kreisförmiges, im Wesentlichen plattenförmiges Piezoelement 65 auf, das mittels eines Spannelements 67 in der Ausnehmung 61 ortsfest angeordnet ist, wobei das Piezoelement 65 senkrecht zur Versorgungsbohrung 57 im Bereich der Ausnehmung 61 angeordnet ist. Das Spannelement 67 ist als ringförmiger Körper mit einer Einlaufschräge 68 zur Montage des Piezoelements 67 in einem zylindrisch ausgebildeten Lagerbereich 69 ausgebildet. Hierbei ist das Piezoelement 65 unter radialer Vorspannung in dem Lagerbereich 69 aufgenommen. Die parallel zu der Oberseite 71 bzw. der Unterseite 72 des Piezoelements 65 verlaufende Einspannebene des Piezoelements 65 in dem Spannelement 67 verläuft parallel zum Grund 62 der Ausnehmung 61.

Eine Druckerhöhung des Kraftstoffs in der Versorgungsbohrung 57 führt zu einer elastischen Verformung des Grunds 62 der Ausnehmung 61 nach außen und einer radialen Vergrößerung/Aufweitung der Umfangswand 63 im Bereich des Spannelements 67, wie dies durch die gestrichelte Darstellung des Grunds 62 und der Umfangswand 63 in der Fig. 2 verdeutlicht sein soll. Dies wiederum führt zu einer Reduzierung der Vorspannung bzw. Druckspannung in dem Piezoelement 65 und zur Erzeugung eines entsprechenden Spannungssignals, welches mittels einer nicht dargestellten Auswerteeinrichtung ausgewertet werden kann, um insbesondere den Öffnungs- bzw. Schließzeitpunkt der Düsennadel 25 zu detektieren. Hierbei wird sich die Erkenntnis zunutze gemacht, dass beim Öffnen der Düsennadel 25 durch den Abfluss des Kraftstoffs in den Brennraum der Brennkraftmaschine eine Druckerniedrigung im Hochdruckraum 17 sowie der Versorgungsbohrung 57 erfolgt, und beim Schließen eine Druckerhöhung durch das Verschließen der Einspritzöffnungen 15, wobei die jeweilige Druckänderung mittels des Sensors 60 erfasst wird.

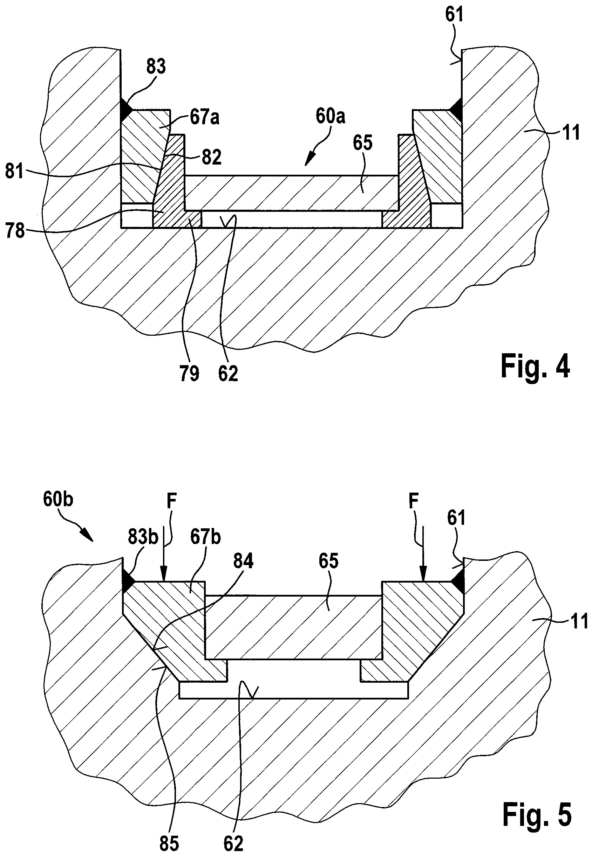

In den Fig. 3 und 4 ist ein modifizierter Sensor 60a dargestellt, der sich von dem Sensor 60 gemäß der Fig. 2 dadurch unterscheidet, dass das Spannelement 67a mit einem Isolationsring 78 zusammenwirkt. Der Isolationsring 78 weist auf der dem Grund 62 der Ausnehmung 61 zugewandten Seite einen radial nach innen ragenden, umlaufenden Haltebereich 79 auf, der das Piezoelement 65 parallel zum Grund 62 positioniert. Ferner weisen das Spannelement 67a sowie der Isolationsring 78 in Wirkverbindung zueinander angeordnete, radial umlaufende und schräg angeordnete Führungsflächen 81, 82 auf, um die radiale Vorspannung auf das Piezoelement 65 zu erzeugen.

Während die Fig. 3 den Zustand zeigt, wie er sich während der Montage des Piezoelements 65 bzw. des Sensors 60a einstellt, zeigt die Fig. 4 die Endposition des Sensors 60a in der Ausnehmung 61. Insbesondere erkennt man hierbei, dass der beispielsweise aus Keramik oder Kunststoff bestehend Isolationsring 78 am Grund 62 der Ausnehmung 61 aufliegt. Das einteilig oder aber mehrteilig ausgebildete Spannelement 67a wird im Einbauzustand, bei der auf das Piezoelement 65 die benötigte radiale Vorspannung generiert ist, beispielsweise mittels einer punktförmigen oder radial umlaufenden Laserschweißnaht 83 an der Innenwand der Ausnehmung 61 befestigt bzw. fixiert.

In der Fig. 5 ist eine weitere Ausführungsform des Sensors 60b dargestellt, bei dem eine schräg angeordnete Führungsfläche 84 des aus elektrisch nicht leitendem Material bestehenden Spannelements 67b im Bereich des Grunds 62 der Ausnehmung 61 an einer schräg angeordneten Anlagefläche 85 der Ausnehmung 61 anliegt. Durch eine entsprechende Kraftbeaufschlagung des Spannelements 67b durch eine Kraft F wird die gewünschte radiale Vorspannung in dem Piezoelement 65 erzeugt. In Analogie zum Spannelement 67a wird auch das Spannelement 67b in seinem Einbauzustand mittels einer Laserschweißnaht 83b in der Ausnehmung 61 fixiert.

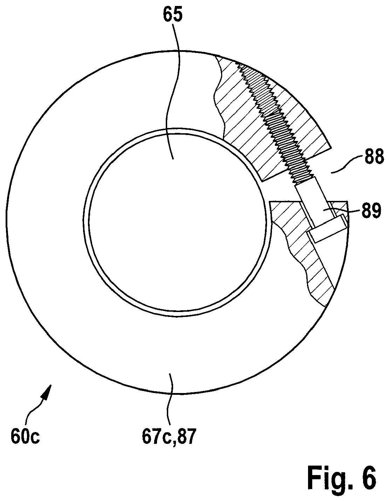

Das in der Fig. 6 in Draufsicht dargestellte Spannelement 67c unterscheidet sich von den Spannelementen 67, 67a und 67b dadurch, dass das Spannelement 67c in Form eines Spannrings 87 ausgebildet ist, der einen radial verlaufenden Schlitz 88 aufweist. Im Bereich des Schlitzes 88 ist ein Spannmittel, beispielsweise in Form einer Spannschraube 89 oder eines (nicht dargestellten) Spannstifts angeordnet, um die Öffnungsweite des Spannrings 87, und somit die radiale Vorspannung auf das innerhalb der Ausnehmung des Spannrings 87 angeordneten Piezoelements 65 einzustellen. Der in der Fig. 6 dargestellte Sensor 60c ermöglicht es, diesen außerhalb des Kraftstoffinjektors 10 zu montieren bzw. vorzuspannen, so dass es genügt, diesen anschließend an die gewünschte Stellung in die Ausnehmung 61 des Injektorgehäuses 11 einzusetzen.

Der soweit beschriebene Kraftstoffinjektor 10 bzw. deren Sensoren 60, 60a bis 60c können in vielfältiger Art und Weise abgewandelt bzw. modifiziert werden, ohne vom Erfindungsgedanken abzuweichen.

## Patentansprüche

1. Kraftstoffinjektor (10), insbesondere Common-Rail-Injektor, mit einem Injektorgehäuse (11), in dem ein Hochdruckraum (17) ausgebildet ist, der über eine im Injektorgehäuse (11) ausgebildete Versorgungsbohrung (57) mit unter Druck stehendem Kraftstoff versorgbar ist, mit wenigstens einer zumindest mittelbar mit dem Hochdruckraum (17) verbundenen, im Injektorgehäuse (11) ausgebildeten Einspritzöffnung (15) zum Einspritzen von Kraftstoff in den Brennraum einer Brennkraftmaschine, mit einem die wenigstens eine Einspritzöffnung (15) freigebenden oder verschließenden Einspritzglied (25), und mit einer ein Piezoelement (65) aufweisenden Sensoreinrichtung (60; 60a; 60b; 60c) zur zumindest mittelbaren Erfassung eines Kraftstoffdrucks im Injektorgehäuse (11), wobei die Sensoreinrichtung (60; 60a; 60b; 60c) ein Spannelement (67; 67a; 67b; 67c) zur zumindest bereichsweisen radialen Aufnahme des kreis- bzw. scheibenförmig ausgebildeten Piezoelements (65) aufweist, wobei das Spannelement (67; 67a; 67b; 67c) das Piezoelement (65) in einer zumindest im Wesentlichen parallel zum Piezoelement (65) verlaufenden Richtung in Abhängigkeit des Kraftstoffdrucks in dem Injektorgehäuse (11) mit einer Druckspannung kraftbeaufschlagt, wobei die Sensoreinrichtung (60; 60a; 60b; 60c) im Bereich einer sacklochförmigen Ausnehmung (61) im Injektorgehäuse (11) durch eine radial umlaufende Umfangswand (63) unter radialer Vorspannung in Form einer Druckspannung aufgenommen ist, wobei sich die Größe der Ausnehmung (61) in der Ebene des Spannelements (67; 67a; 67b; 67c) in Abhängigkeit vom Kraftstoffdruck ändert, wobei das Piezoelement (65) unter radialer Vorspannung in dem Spannelement (67; 67a; 67b; 67c) aufgenommen ist, und wobei das Spannelement (67; 67a; 67b; 67c) ringförmig bzw. in Form eines Spannrings (87) ausgebildet ist.

2. Kraftstoffinjektor nach Anspruch 1,
**dadurch gekennzeichnet,**
**dass** die Ausnehmung (61) in Wirkverbindung mit der Versorgungsbohrung (57) angeordnet ist, wobei zwischen der Ausnehmung (61) und der Versorgungsbohrung (57) ein Wandabschnitt (64) ausgebildet ist.

3. Kraftstoffinjektor nach Anspruch 1 oder 2,
**dadurch gekennzeichnet,**
**dass** die Wanddicke des Injektorgehäuses (11) im Bereich des Wandabschnitts (64) der Ausnehmung (61) reduziert ist.

4. Kraftstoffinjektor nach einem der Ansprüche 1 bis 3,
**dadurch gekennzeichnet,**
**dass** das Piezoelement (65) und der Grund (62) der Ausnehmung (61) parallel zueinander angeordnet sind.

5. Kraftstoffinjektor nach Anspruch 1,
**dadurch gekennzeichnet,**
**dass** das Spannelement (67a; 67b; 67c) Mittel (78, 89) zur Einstellung der radialen Vorspannkraft auf das Piezoelement (65) aufweist.

6. Verwendung eines Kraftstoffinjektors (10) nach einem der Ansprüche 1 bis 5 bei selbstzündenden Brennkraftmaschinen mit einem Systemdruck von mehr als 2000bar.

## Claims

1. Fuel injector (10), in particular common rail injector, having an injector housing (11), in which a high pressure space (17) is configured which can be supplied with pressurized fuel via a supply bore (57) which is configured in the injector housing (11), having at least one injection opening (15) which is configured in the injector housing (11) and is connected at least indirectly to the high pressure space (17) for injecting fuel into the combustion chamber of an internal combustion engine, having an injection member (25) which opens or closes the at least one injection opening (15), and having a sensor device (60; 60a; 60b; 60c) which has a piezoelectric element (65) for the at least indirect detection of a fuel pressure in the injector housing (11), the sensor device (60; 60a; 60b; 60c) having a clamping element (67; 67a; 67b; 67c) for radially receiving, at least in regions, the piezoelectric element (65) of circular or disc-shaped configuration, the clamping element (67; 67a; 67b; 67c) loading the piezoelectric element (65) with the force of a compressive stress in a direction which runs at least substantially parallel to the piezoelectric element (65), in a manner which is dependent on the fuel pressure in the injector housing (11), the sensor device (60; 60a; 60b; 60c) being received by way of a radially running circumferential wall (63) in the region of a blind bore-shaped recess (61) in the injector housing (11), under radial prestress in the form of a compressive stress, the size of the recess (61) in the plane of the clamping element (67; 67a; 67b; 67c) changing in a manner which is dependent on the fuel pressure, the piezoelectric element (65) being received in the clamping element (67; 67a; 67b; 67c) under radial prestress, and the clamping element (67; 67a; 67b; 67c) being of annular configuration or being configured in the form of a clamping ring (87).

2. Fuel injector according to Claim 1, **characterized in that** the recess (61) is arranged in an operative connection with the supply bore (57), a wall section (64) being configured between the recess (61) and the supply bore (57).

3. Fuel injector according to Claim 1 or 2, **characterized in that** the wall thickness of the injector housing (11) is reduced in the region of the wall section (64) of the recess (61).

4. Fuel injector according to one of Claims 1 to 3, **characterized in that** the piezoelectric element (65) and the bottom (62) of the recess (61) are arranged parallel to one another.

5. Fuel injector according to Claim 1, **characterized in that** the clamping element (67a; 67b; 67c) has means (78, 89) for setting the radial prestressing force on the piezoelectric element (65).

6. Use of a fuel injector (10) according to one of Claims 1 to 5 in the case of compression ignition internal combustion engines with a system pressure of more than 2000 bar.

## Revendications

1. Injecteur de carburant (10), notamment injecteur de rampe de distribution commune, comprenant un corps d'injecteur (11) dans lequel est formé un espace à haute pression (17), lequel peut être alimenté avec du carburant sous pression par le biais d'un perçage d'alimentation (57) formé dans le corps d'injecteur (11), comprenant au moins une ouverture d'injection (15), formée dans le corps d'injecteur (11) et reliée au moins indirectement avec l'espace à haute pression (17), destinée à injecter du carburant dans la chambre de combustion d'un moteur à combustion interne, comprenant un élément d'injection (25) qui libère ou ferme l'au moins une ouverture d'injection (15), et comprenant un dispositif de détection (60 ; 60a ; 60b ; 60c) qui possède un élément piézoélectrique (65) servant à détecter au moins indirectement une pression de carburant dans le corps d'injecteur (11),
le dispositif de détection (60 ; 60a ; 60b ; 60c) possédant un élément de serrage (67 ; 67a ; 67b ; 67c) destiné à accueillir radialement au moins dans certaines zones l'élément piézoélectrique (65) réalisé en forme de cercle ou de disque, l'élément de serrage (67 ; 67a ; 67b ; 67c) soumettant l'élément piézoélectrique (65) à une force de contrainte de pression dans une direction qui s'étend au moins sensiblement parallèlement à l'élément piézoélectrique (65) en fonction de la pression de carburant dans le corps d'injecteur (11), le dispositif de détection (60 ; 60a ; 60b ; 60c) étant logé dans la zone d'une cavité (61) en forme de trou borgne dans le corps d'injecteur (11) par une paroi périphérique (63) circulaire dans le sens radial sous précontrainte radiale sous la forme d'une contrainte de pression, la taille de la cavité (61) dans le plan de l'élément de serrage (67 ; 67a ; 67b ; 67c) variant en fonction de la pression de carburant, l'élément piézoélectrique (65) étant accueilli dans l'élément de serrage (67 ; 67a ; 67b ; 67c) sous précontrainte radiale, et l'élément de serrage (67 ; 67a ; 67b ; 67c) étant réalisé en forme d'anneau ou sous la forme d'une bague de serrage (87).

2. Injecteur de carburant selon la revendication 1, **caractérisé en ce que** la cavité (61) est disposée en liaison fonctionnelle avec le perçage d'alimentation (57), une portion de paroi (64) étant formée entre la cavité (61) et le perçage d'alimentation (57).

3. Injecteur de carburant selon la revendication 1 ou 2, **caractérisé en ce que** l'épaisseur de paroi du corps d'injecteur (11) est réduite dans la zone de la portion de paroi (64) de la cavité (61).

4. Injecteur de carburant selon l'une des revendications 1 à 3, **caractérisé en ce que** l'élément piézoélectrique (65) et le fond (62) de la cavité (61) sont disposés en parallèle l'un à l'autre.

5. Injecteur de carburant selon la revendication 1, **caractérisé en ce que** l'élément de serrage (67a ; 67b ; 67c) possède des moyens (78, 89) pour régler la force de précontrainte radiale sur l'élément piézoélectrique (65).

6. Utilisation d'un injecteur de carburant (10) selon l'une des revendications 1 à 5 sur des moteurs à combustion interne à allumage par compression ayant une pression de système supérieure à 2000 bar.
